# EUROPEAN PATENT SPECIFICATION

(11) **EP 4 150 412 B1**
(45) Date of publication and mention of the grant of the patent: **22.10.2025**
(21) Application number: 20733256.0
(22) Date of filing: 15.06.2020
(51) Int. Cl.: G05B 13/02

(54) **METHOD AND SYSTEM FOR A CONTROLLER**
VERFAHREN UND SYSTEM FÜR EINE STEUERUNG
PROCÉDÉ ET SYSTÈME POUR UN CONTRÔLEUR

(43) Date of publication of application: 22.03.2023
(73) Proprietor: Huawei Technologies Co., Ltd., Longgang District, Shenzhen, Guangdong 518129 (CN)
(72) Inventor: BARLIER, Merwan, 80992 Munich (DE); KEGL, Balazs, 80992 Munich (DE); COLIN, Igor, 80992 Munich (DE); DOS SANTOS, Ludovic, 80992 Munich (DE)
(74) Representative: Thun, Clemens
(86) International application number: PCT/EP2020/066427
(87) International publication number: WO 2021/254589

(56) References cited:
- SG-A- 102018 082 90X
- US-A1- 2018 204 116
- US-A1- 2020 050 178
- US-B1- 7 644 051

## Description

### TECHNICAL FIELD

The present disclosure relates to a system and method for an industrial control system. In particular, the system and methods described herein determine a sequence of actions for a controller in an industrial control system.

### BACKGROUND

Proportional-integral-derivative (PID) controllers are widely deployed in industrial control systems. Although efficient, these control loop mechanisms are often suboptimal and require expert knowledge and time to be calibrated.

In recent years, machine learning techniques have become ubiquitous with applications being found across many different areas of technology. Reinforcement learning is an unsupervised learning method that may be used to optimize a model comprising a sequence of actions performed by an agent. Reinforcement learning has successfully been applied to boardgames such as chess and Go. In these examples a selection of a sequence of actions may be tested against the online performance of the sequence in the game. In some settings, the possibility of testing and validation of a model in an online environment is either limited or impossible.

SG 1020 1808 290 relates to optimization of control of data center cooling.

### SUMMARY

It is an object of the invention to provide a method for determining a sequence of actions for a controller in an industrial control system.

The foregoing objects are achieved by the features of the independent claims, in particular independent method claim 1 and independent system claim 7. Further implementation forms are apparent from the dependent claims, the description and the figures.

According to a first aspect, a method for a controller in an industrial control system is provided. The method comprises accessing a first subset of data in a dataset, the first subset comprising a plurality of tuples, each tuple comprising: a first state of the industrial control system, an action associated to the controller interacting with the industrial control system, a second state of the industrial control system, subsequent to the first state, that is transitioned into from the first state as a result of the controller performing the action; and a parameter value in consideration of a parameter that is generated as a result of the industrial control system transitioning into the second state. The method further comprises evaluating a learning algorithm on the first subset evaluating, in a validation environment, an action associated to the controller that is output by the learning algorithm, and determining a sequence of actions to optimize the parameter on the basis of the evaluation.

The method according to the first aspect provides a method of identifying a sequence of actions on the basis of evaluation in a validation environment that models the behavior of a real-world system. The best sequence is selected based on its performances in the validation environment. The method may be used in a situation where the real system is unavailable to evaluate an output of a learning algorithm.

According to a second aspect a system is provided. The system comprises a memory and a processor communicatively coupled to the memory. The memory includes program code which, when executed by the processor, provides instructions to access a first subset of data in a dataset, the first subset comprising a plurality of tuples, each tuple comprising: a first state of the industrial control system an action associated to a controller interacting with the industrial control system a second state of the industrial control system, subsequent to the first state, that is transitioned into from the first state as a result of the controller performing the action and a parameter value in consideration of a parameter that is generated as a result of the industrial control system transitioning into the second state. The program code further comprises instructions to evaluate a learning algorithm on the first subset, evaluate, in a validation environment, an action associated to the controller that is output by the learning algorithm and determine a sequence of actions to optimize the parameter on the basis of the evaluation.

According to the invention the validation environment comprises a predictive model that generates a subsequent state and an estimate of the parameter value on the basis of a current state of the industrial control system and an action associated to the controller.

According to the invention the method further comprises generating the validation environment on the basis of a second subset of data in the dataset, the second subset comprising a plurality of tuples, each tuple comprising: a first state of the industrial control system, an action associated to the controller interacting with the industrial control system a second state of the industrial control system, subsequent to the first state, that is transitioned into from the first state as a result of the controller performing the action and a parameter value in consideration of the parameter that is generated as a result of the industrial control system transitioning into the second state.

The method according to the second implementation generates a validation environment on the basis of a historical dataset of data relating to the industrial control system.

In a third implementation form generating the validation environment comprises accessing the predictive model, comparing, for each tuple in the plurality of the tuples in the second subset, a second state and a parameter value that are generated on the basis of evaluating the predictive model on the first state and action of the tuple, and the second state and parameter value of the tuple and modifying the predictive model on the basis of the comparison.

The method according to the third implementation provides a method for generating a predictive model by evaluating the predictive model on the historical dataset and modifying it on the basis of a comparison with an expected output.

In a fourth implementation form the method comprises evaluating the sequence of actions on the controller and generating tuples of data for the first and second subsets of the dataset on the basis of the application of the sequence of actions.

The method according to the fourth implementation provides a method of generating further historical data for the dataset. This data may be used to enhance the quality and accuracy of the output of the learning algorithm and the validation environment.

In a fifth implementation form the parameter is a reward signal generated on the basis of feedback from the industrial control system.

In a sixth implementation form the predictive model is a linear regression function, a non-linear predictive function, a neural network, a gradient boosting machine, a random forest, a support vector machine, a nearest neighbour model, a Gaussian process, a Bayesian regression and/or an ensemble.

In a seventh implementation form the learning algorithm is a batch reinforcement learning algorithm.

In an eighth implementation form the industrial control system is a cooling system in a data center.

These and other aspects of the invention will be apparent from and the embodiment(s) described below.

### BRIEF DESCRIPTION OF THE DRAWINGS

For a more complete understanding of the present disclosure, and the advantages thereof, reference is now made to the following descriptions taken in conjunction with the accompanying drawings, in which:
Figure 1 shows a schematic diagram of a data center, according to an example.
Figure 2 shows a schematic diagram of workflow for generating a sequence of actions, according to an example.
Figure 3 is a block diagram of a method for a controller in an industrial control system, according to an example.
Figure 4 is a block diagram of a computing system that may be used for implementing the devices and methods disclosed herein.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

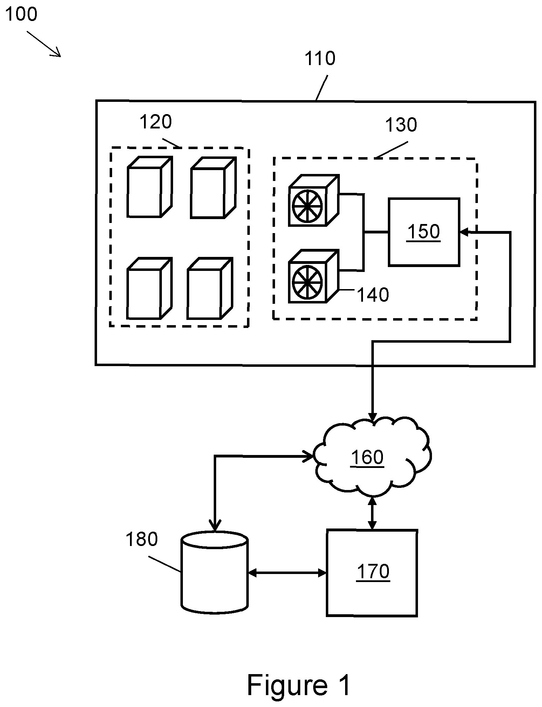

Figure 1 is a schematic diagram 100 showing an industrial control system, according to an example. An industrial control system is defined generally as a collection of hardware and/or software which is used in the control of an industrial process. The example shown in Figure 1 is a cooling system in a data center. The methods described herein are not limited to this example and may be used in conjunction with any controllers and industrial control system. For example, the methods described herein may be used in conjunction with programmable logic controllers (PLC), proportional-integral-derivative (PID) controllers, supervisory control and data acquisition (SCADA) systems and other kinds of controls systems.

The example in Figure 1 shows a data center 110 comprising servers 120 and a cooling system 130 arranged to regulate the temperature within the data center 110. The cooling system 140 comprises cooling fans 140 and a controller 150. The controller 150 is coupled to the cooling fans 140. The controller 150 may be arranged to perform actions such as switching the fans 140 on and off and regulating the speed of the fans. The controller 150 is communicatively coupled to a network 160. The network 160 may be a local area network (LAN) or wide area network (WAN).

The apparatus shown in Figure further comprises a computing system 170 and a data storage device 180. The computing system 170 and the data storage device 180 are also connected to the network 160. The computing system 170 is connected to the data storage device 180. The computing system 170 is arranged to access data stored on the data storage 170. In Figure 1, the computing system 170 is located outside of the data center 110. The controller 150 is connected to the computing system 170 and data storage device 180 via the network 160. In other examples, the computing system 170 may be located within the data center 110. In such a case, the controller 150 may be directly connected to the computing system 170, instead of a network.

According to examples, the controller 150 is arranged to receive data from the network 160. For example, the computer system 160 may send instructions to the controller 150 to perform actions such as modifying the speed of one of the cooling fans 140. In response, the controller 150 is arranged to receive and execute the instruction and modify the speed of the cooling fan. In other examples, the controller 150 may be arranged to communicate data to the computing system 170 and/or the data storage device 180. For example, the controller 150 may communicate state data describing the state of the cooling system 130 to the computing system 170. The state data may be stored in the data storage device 180.

The methods and systems described herein may be used to determine an optimal sequence of actions for a controller in an industrial control system, such as the controller 150 shown in Figure 1. The methods employ machine learning to determine the optimal sequence of actions. In a real-world setting such as the data center 110 shown in Figure 1, it is often not possible to check whether a sequence of actions optimizes the performance of the system. Running a sub-optimal sequence could cause damage to the infrastructure. To address this, in examples of the methods and systems described herein, the output of a learning algorithm is validated in an environment that simulates the industrial control system. In examples, the validation environment is a predictive model that infers a state of the industrial control system from an input state and an action associated to the controller. This validation environment is used to select an optimal sequence of actions without having to run the sequence of actions on a real controller in a real-world setting.

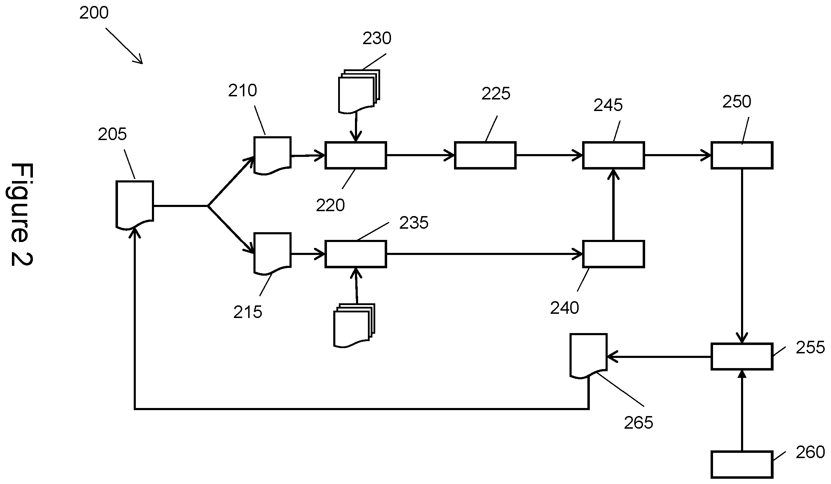

Figure 2 is a simplified schematic diagram showing a workflow 200, according to an example. The workflow 200 is a workflow for determining a sequence of actions for a controller in an industrial control system such as the controller 150 shown in Figure 1. The workflow 200 may be implemented by the computing system 170 and data storage device 180 in Figure 1.

The starting point in the workflow 200 is a dataset 205. The dataset 205 comprises historical data relating to an industrial control system. Such a dataset may be stored in the data storage device 180 and accessed by the computing system 170. In examples described herein, the dataset 205 comprises a plurality of tuples of data. Each tuple comprises a first state of the industrial control system, an action associated to a controller interacting with the industrial control system, a second state of the industrial control system, subsequent to the first state, that is transitioned into from the first state as a result of the controller performing the action and, in some cases, a parameter value in consideration of a parameter that is generated as a result of the industrial control system transitioning into the second state. The parameter may comprise a reward signal generated on the basis of feedback from the industrial control system. For example, in the cooling system 130 in Figure 1, the historical dataset 205 may comprise tuples of data including state data relating to the fans 140 in the cooling system 130, the last action performed by the controller 140 and a temperature of the data center 110.

In the context of industrial control, a reinforcement learning algorithm may be used to identify an optimal sequence of actions for a controller. In general, reinforcement learning is an unsupervised learning process of an agent that performs actions in an environment. The agent interacts with its environment in discrete time steps. At each time t, the agent receives an observation O, which includes a reward *rₜ.* It then chooses an action *aₜ* from the set of available actions, which is subsequently sent to the environment. The environment moves to a new state *s*_{*t*+*1*} at time t+1 and the reward *rₜ₊₁* associated with the transition (*sₜ, aₜ, sₜ₊₁*) is determined. The goal of a reinforcement learning agent is to collect as much reward from performing the actions as possible. Reinforcement learning is applicable to tasks that are of an inherently sequential nature as the agent chooses the next action as a function of the history.

In the workflow 200, the dataset 205 is split into a first subset 210 of tuples and a second subset 215 of tuples. At block 220 a reinforcement learning algorithm is applied to the first subset 210. The reinforcement learning algorithm outputs an agent comprising a learned sequence of actions 225 from sequences of possible actions 230. The reinforcement learning algorithm may be executed by the computing system 170. The reinforcement learning algorithm may be a batch reinforcement learning algorithm. Batch reinforcement learning is a form of reinforcement learning that may be used to output select agent in an offline setting from a limited real-world data set.

In Figure 2, at block 235, the second subset 215 of the historical dataset 205 is used to generate a validation environment 240. The validation environment comprises a predictive model such as a regression model. The predictive model generates a subsequent state of the industrial control system and an estimate of a parameter value on the basis of a current state of the industrial control system and an action associated to the controller.

According to examples described herein, generating the validation environment comprises: accessing the predictive model, comparing, for each tuple in the plurality of the tuples in the second subset, a second state and a parameter value that are generated on the basis of evaluating the predictive model on the first state and action of the tuple, and the second state and parameter value of the tuple; and modifying the predictive model on the basis of the comparison.

At block 245 of the workflow 200, each learned agent 225 is evaluated in the validation environment 240. According to examples, evaluating an agent 225 comprises evaluating an action of the agent to determine whether the subsequent actions are optimal. At block 250 the best agent on the basis of the evaluation of the learned agents in the validation environment. For example, in the cooling system 130 in Figure 1, the validation environment simulates the cooling system 130. An agent comprises a sequence of actions of the controller 150 interacting with the fans 140 in the cooling system 130. In that case, the goal is to optimize the temperature in the data center 110. The best agent is the best sequence of actions for the controller to maintain a temperature in the data center 110.

At block 255 a test simulator 260 may be executed on the agent. The test simulator 260 may be similar to the validation environment 240. For example, the test simulator may be a predictive model that models the behaviour of the industrial control system. However, the test simulator is generated using a different dataset to the validation environment. This avoids problems such as over-fitting of data. Further data 270 may be generated from executing the agent in the test simulator 265 and added to the historic dataset 205.

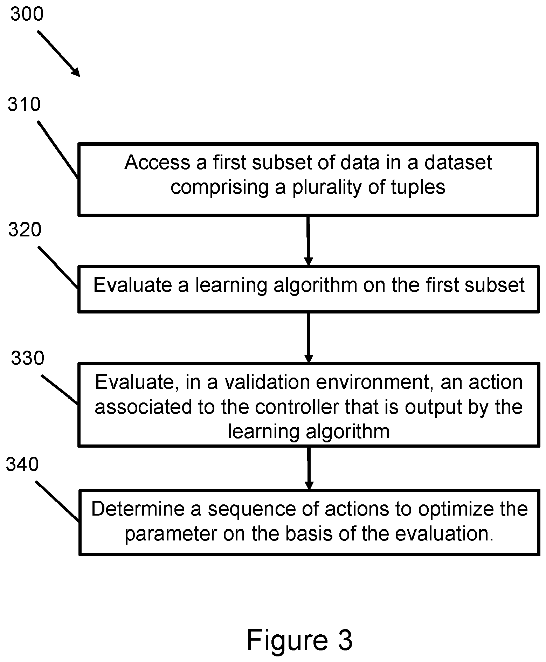

Figure 3 shows a method 200 for a controller in an industrial control system, according to example. The method 200 may be implemented on the computing system 170 shown in Figure 1, to determine a sequence of actions for the controller 150 to perform, to optimize the temperature in the data center 110.

At block 310, the method 300 comprises accessing a first subset of data in a dataset, the first subset comprising a plurality of tuples. According to examples, each tuple of data comprises: a first state of an industrial control system, an action associated to a controller interacting with the industrial control system, a second state of the industrial control system, subsequent to the first state, that is transitioned into from the first state as a result of the controller performing the action and a parameter value in consideration of a parameter that is generated as a result of the industrial control system transitioning into the second state.

At block 320, the method 200 comprises evaluating a learning algorithm on the first subset. In examples, the the learning algorithm is a batch reinforcement learning algorithm.

At block 330, the method 200 comprises evaluating, in a validation environment, an action associated to the controller that is output by the learning algorithm. In examples, the validation environment comprises a predictive model that generates a subsequent state and an estimate of the parameter value on the basis of a current state of the industrial control system and an action associated to the controller. In examples described herein, the predictive model is a linear regression function, a non-linear predictive function, a neural network, a gradient boosting machine, a random forest, a support vector machine, a nearest neighbour model, a Gaussian process, a Bayesian regression and/or an ensemble of these models.

The validation environment may be generated on the basis of a second subset of data in the dataset. In some cases, generating the validation environment comprises accessing a predictive model, comparing, for each tuple in the plurality of the tuples in the second subset, a second state and a parameter value that are generated on the basis of evaluating the predictive model on the first state and action of the tuple, and the second state and parameter value of the tuple; and modifying the predictive model on the basis of the comparison.

At block 340 the method comprises determining the sequence of actions to optimize the parameter on the basis of the evaluation.

Examples in the present disclosure can be provided as methods, systems or machine-readable instructions, such as any combination of software, hardware, firmware or the like. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a general-purpose computer, a special purpose computer, an embedded processor or processors of other programmable data processing devices to realize the functions described in the description and diagrams. In particular, a processor or processing apparatus may execute the machine-readable instructions. Thus, modules of apparatus may be implemented by a processor executing machine-readable instructions stored in a memory, or a processor operating in accordance with instructions embedded in logic circuitry. The term 'processor' is to be interpreted broadly to include a CPU, processing unit, logic unit, or programmable gate set etc. The methods and modules may all be performed by a single processor or divided amongst several processors. Such machine-readable instructions may also be stored in a computer readable storage that can guide the computer or other programmable data processing devices to operate in a specific mode.

Such machine-readable instructions may also be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

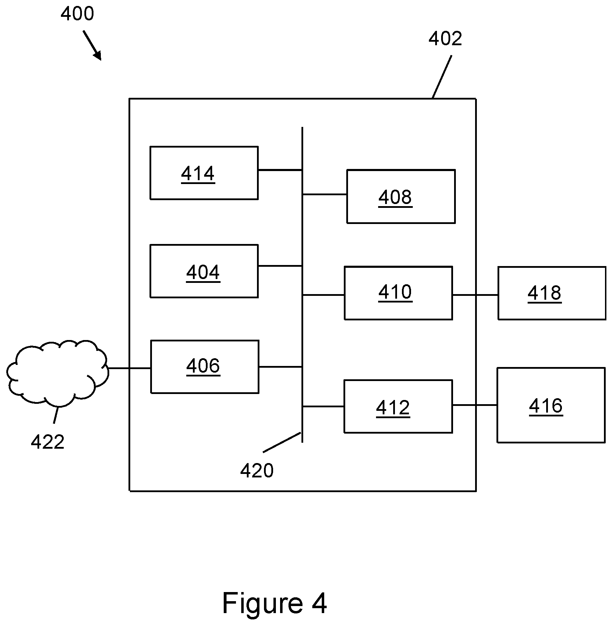

Figure 4 is a block diagram of a computing system 400 that may be used for implementing the devices and methods disclosed herein. Specific devices may utilize all of the components shown or only a subset of the components, and levels of integration may vary from device to device. Furthermore, a device may contain multiple instances of a component, such as multiple processing units, processors, memories, transmitters, receivers, etc. The computing system 400 includes a processing unit 402. The processing unit includes a central processing unit (CPU) 414, memory 408, and may further include a mass storage device 404, a video adapter 410, and an I/O interface 412 connected to a bus 420.

The bus 420 may be one or more of any type of several bus architectures including a memory bus or memory controller, a peripheral bus, or a video bus. The CPU 414 may comprise any type of electronic data processor. The memory 408 may comprise any type of non-transitory system memory such as static random access memory (SRAM), dynamic random access memory (DRAM), synchronous DRAM (SDRAM), read-only memory (ROM), or a combination thereof. In an embodiment, the memory 408 may include ROM for use at boot-up, and DRAM for program and data storage for use while executing programs.

The mass storage 404 may comprise any type of non-transitory storage device configured to store data, programs, and other information and to make the data, programs, and other information accessible via the bus 420. The mass storage 404 may comprise, for example, one or more of a solid state drive, hard disk drive, a magnetic disk drive, or an optical disk drive.

The video adapter 410 and the I/O interface 412 provide interfaces to couple external input and output devices to the processing unit 402. As illustrated, examples of input and output devices include a display 418 coupled to the video adapter 410 and a mouse, keyboard, or printer 416 coupled to the I/O interface 412. Other devices may be coupled to the processing unit 402, and additional or fewer interface cards may be utilized. For example, a serial interface such as Universal Serial Bus (USB) (not shown) may be used to provide an interface for an external device.

The processing unit 402 also includes one or more network interfaces 406, which may comprise wired links, such as an Ethernet cable, or wireless links to access nodes or different networks. The network interfaces 406 allow the processing unit 402 to communicate with remote units via the networks. For example, the network interfaces 406 may provide wireless communication via one or more transmitters/transmit antennas and one or more receivers/receive antennas. In an embodiment, the processing unit 402 is coupled to a local-area network 422 or a wide-area network for data processing and communications with remote devices, such as other processing units, the Internet, or remote storage facilities.

The described embodiments are to be considered in all respects as illustrative and not restrictive. In particular, the scope of the invention is indicated by the appended claims.

## Claims

1. A method (300) for a controller (150) in an industrial control system (130) being a cooling system (130) in a data center (110), the method comprising:
accessing (310) a first subset (210) of data in a dataset (205), the first subset (210) comprising a plurality of tuples, each tuple comprising:
a first state of the industrial control system (130);
an action associated to the controller (150) interacting with the industrial control system (130);
a second state of the industrial control system (130), subsequent to the first state, that is transitioned into from the first state as a result of the controller (150) performing the action; and
a parameter value in consideration of a parameter that is generated as a result of the industrial control system (130) transitioning into the second state;
wherein the method further comprises:
evaluating (320, 220) a learning algorithm on the first subset (210);
evaluating (330, 245), in a validation environment (240), an action associated to the controller (150) that is output by the learning algorithm; and
determining (340, 250) a sequence of actions to optimize the parameter on the basis of the evaluation,
wherein the validation environment (240) comprises a predictive model that generates a subsequent state and an estimate of the parameter value on the basis of a current state of the industrial control system (130) and an action associated to the controller (150),
wherein the method further comprises:
generating (235) the validation environment (240) on the basis of a second subset (215) of data in the dataset, the second subset (215) comprising a plurality of tuples, each tuple comprising:
a first state of the industrial control system (130);
an action associated to the controller (150) interacting with the industrial control system (130);
a second state of the industrial control system (130), subsequent to the first state, that is transitioned into from the first state as a result of the controller (150) performing the action; and
a parameter value in consideration of the parameter that is generated as a result of the industrial control system (130) transitioning into the second state.

2. The method of claim 1, wherein generating (235) the validation environment (240) comprises:
accessing the predictive model;
comparing, for each tuple in the plurality of the tuples in the second subset (215), a second state and a parameter value that are generated on the basis of evaluating the predictive model on the first state and action of the tuple, and the second state and parameter value of the tuple; and
modifying the predictive model on the basis of the comparison.

3. The method according to any of the preceding claims, comprising:
evaluating (255) the sequence of actions on the controller (150); and
generating tuples of data (270) for the first (210) and second (215) subsets of the dataset (205) on the basis of the application of the sequence of actions.

4. The method according to any of the preceding claims wherein the parameter is a reward signal generated on the basis of feedback from the industrial control system (130).

5. The method of any of claims 1 to 4, wherein the predictive model is a linear regression function, a non-linear predictive function, a neural network, a gradient boosting machine, a random forest, a support vector machine, a nearest neighbour model, a Gaussian process, a Bayesian regression and/or an ensemble.

6. The method of according to any of the preceding claims, wherein the learning algorithm is a batch reinforcement learning algorithm.

7. A system (400) comprising:
at least one processor (402); and
at least one memory (408) including program code which when executed by at least one processor provides instructions to:
access a first subset (210) of data in a dataset (205), the first subset (210) comprising a plurality of tuples, each tuple comprising:
a first state of an industrial control system (130) being a cooling system (130) in a data center (110);
an action associated to a controller (150) interacting with the industrial control system (130);
a second state of the industrial control system (130), subsequent to the first state, that is transitioned into from the first state as a result of the controller (150) performing the action; and
a parameter value in consideration of a parameter that is generated as a result of the industrial control system (130) transitioning into the second state;
wherein the program code further comprises instructions to:
evaluate (220) a learning algorithm on the first subset (210);
evaluate (245), in a validation environment (240), an action associated to the controller (150) that is output by the learning algorithm; and
determine (250) a sequence of actions to optimize the parameter on the basis of the evaluation,
wherein the validation environment comprises a predictive model that generates a subsequent state and an estimate of the parameter value on the basis of a current state of the industrial control system (130) and an action associated to the controller (150),
wherein the program code comprises instructions to generate the validation environment (240) on the basis of a second subset (215) of data in the dataset (205), the second subset (215) comprising a plurality of tuples, each tuple comprising:
a first state of the industrial control system (130);
an action associated to the controller (150) interacting with the industrial control system (130);
a second state of the industrial control system (130), subsequent to the first state, that is transitioned into from the first state as a result of the controller (150) performing the action; and
a parameter value in consideration of the parameter that is generated as a result of the industrial control system (130) transitioning into the second state.

8. The system of claim 7, wherein to generate (235) the validation environment (240), the program code comprises instructions to:
access the predictive model;
compare, for each tuple in the plurality of the tuples in the second subset (215), a second state and a parameter value that are generated on the basis of evaluating the predictive model on the first state and action of the tuple, and the second state and parameter value of the tuple; and
modify the predictive model on the basis of the comparison.

9. The system of any one of claims 7 to 8, wherein the program code comprises instructions to:
evaluate the sequence of actions on the controller (150); and
generate tuples of data for the first (210) and second (215) subsets of the dataset (205) on the basis of the application of the sequence of actions.

10. The system of any one of claims 7 to 9, wherein the parameter is a reward signal generated on the basis of feedback from the industrial control system (130).

## Patentansprüche

1. Verfahren (300) für eine Steuerung (150) in einem industriellen Steuerungssystem (130), das ein Kühlsystem (130) in einem Datenzentrum (110) ist, wobei das Verfahren umfasst:
Zugreifen (310) auf eine erste Teilmenge (210) von Daten in einem Datensatz (205), wobei die erste Teilmenge (210) eine Vielzahl von Tupeln umfasst, wobei jedes Tupel umfasst:
einen ersten Zustand des industriellen Steuerungssystems (130);
eine Aktion, die mit der Steuerung (150), die mit dem industriellen Steuerungssystem (130) zusammenwirkt, verknüpft ist;
einen zweiten Zustand des industriellen Steuerungssystems (130), im Anschluss an den ersten Zustand, der von dem ersten Zustand als Ergebnis eines Durchführens der Aktion durch die Steuerung (150), übergeht; und
einen Parameterwert unter Berücksichtigung eines Parameters, der als Ergebnis des Übergehens des industriellen Steuerungssystems (130) in den zweiten Zustand generiert wird;
wobei das Verfahren ferner umfasst:
Auswerten (320, 220) eines Lernalgorithmus an der ersten Teilmenge (210);
Auswerten (330, 245), in einer Validierungsumgebung (240), einer Aktion, die mit der Steuerung (150) verknüpft ist, die durch den Lernalgorithmus ausgegeben wird; und
Bestimmen (340, 250) einer Abfolge von Aktionen, um die Parameter auf der Basis der Auswertung zu optimieren,
wobei die Validierungsumgebung (240) ein Prognosemodell umfasst, das einen anschließenden Zustand und eine Schätzung des Parameterwerts auf der Basis eines aktuellen Zustands des industriellen Steuerungssystems (130) und einer Aktion, die mit der Steuerung (150) verknüpft ist, generiert,
wobei das Verfahren ferner umfasst:
Generieren (235) der Validierungsumgebung (240) auf der Basis einer zweiten Teilmenge (215) von Daten in dem Datensatz, wobei die zweite Teilmenge (215) eine Vielzahl von Tupeln umfasst, wobei jedes Tupel umfasst:
einen ersten Zustand des industriellen Steuerungssystems (130);
eine Aktion, die mit der Steuerung (150), die mit dem industriellen Steuerungssystem (130) zusammenwirkt, verknüpft ist;
einen zweiten Zustand des industriellen Steuerungssystems (130), im Anschluss an den ersten Zustand, der von dem ersten Zustand als Ergebnis eines Durchführens der Aktion durch die Steuerung (150), übergeht; und
einen Parameterwert unter Berücksichtigung eines Parameters, der als Ergebnis des Übergehens des industriellen Steuerungssystems (130) in den zweiten Zustand generiert wird.

2. Verfahren nach Anspruch 1, wobei das Generieren (235) der Validierungsumgebung (240) umfasst:
Zugreifen auf das Prognosemodell;
Vergleichen, für jedes Tupel in der Vielzahl der Tupel in der zweiten Teilmenge (215), eines zweiten Zustands und eines Parameterwerts, die auf der Basis des Auswertens des Prognosemodells an dem ersten Zustand und der Aktion des Tupels und dem zweiten Zustand und dem Parameterwert des Tupels, generiert werden; und
Modifizieren des Prognosemodells auf der Basis des Vergleichs.

3. Verfahren nach einem der vorstehenden Ansprüche, das umfasst:
Auswerten (255) der Abfolge von Aktionen an der Steuerung (150); und
Generieren von Datentupeln (270) für die erste (210) und die zweite (215) Teilmenge des Datensatzes (205) auf der Basis der Anwendung der Abfolge von Aktionen.

4. Verfahren nach einem der vorstehenden Ansprüche, wobei der Parameter ein Belohnungssignal ist, das auf der Basis von einer Rückmeldung von dem industriellen Steuerungssystem (130) generiert wird.

5. Verfahren nach einem der Ansprüche 1 bis 4, wobei das Prognosemodell eine lineare Regressionsfunktion, eine nichtlineare Prognosefunktion, ein neuronales Netz, eine Gradientenverstärkungsmaschine, ein Random Forest, eine Stützvektormaschine, ein Nächste-Nachbarn-Modell, ein Gauß-Prozess, eine Bayes-Regression und/oder ein Ensemble ist.

6. Verfahren nach einem der vorstehenden Ansprüche, wobei der Lernalgorithmus ein Batch-Verstärkungslernalgorithmus ist.

7. System (400), das umfasst:
mindestens einen Prozessor (402); und
mindestens einen Speicher (408), der Programmcode einschließt, der, wenn er durch mindestens einen Prozessor ausgeführt wird, Anweisungen bereitstellt zum:
Zugreifen auf eine erste Teilmenge (210) von Daten in einem Datensatz (205), wobei die erste Teilmenge (210) eine Vielzahl von Tupeln umfasst, wobei jedes Tupel umfasst:
einen ersten Zustand eines industriellen Steuerungssystems (130), das ein Kühlsystem (130) in einem Datenzentrum (110) ist;
eine Aktion, die mit einer Steuerung (150), die mit dem industriellen Steuerungssystem (130) zusammenwirkt, verknüpft ist;
einen zweiten Zustand des industriellen Steuerungssystems (130), im Anschluss an den ersten Zustand, der von dem ersten Zustand als Ergebnis eines Durchführens der Aktion durch die Steuerung (150), übergeht; und
einen Parameterwert unter Berücksichtigung eines Parameters, der als Ergebnis des Übergehens des industriellen Steuerungssystems (130) in den zweiten Zustand generiert wird;
wobei der Programmcode ferner Anweisungen umfasst zum:
Auswerten (220) eines Lernalgorithmus an der ersten Teilmenge (210);
Auswerten (245), in einer Validierungsumgebung (240), einer Aktion, die mit der Steuerung (150) verknüpft ist, die durch den Lernalgorithmus ausgegeben wird; und
Bestimmen (250) einer Abfolge von Aktionen, um den Parameter auf der Basis der Auswertung zu optimieren,
wobei die Validierungsumgebung ein Prognosemodell, das einen anschließenden Zustand und eine Schätzung des Parameterwerts auf der Basis eines aktuellen Zustands des industriellen Steuerungssystems (130) und einer Aktion, die mit der Steuerung (150) verknüpft ist, umfasst,
wobei der Programmcode Anweisungen, um die Validierungsumgebung (240) auf der Basis einer zweiten Teilmenge (215) von Daten in dem Datensatz (205) zu generieren, umfasst, wobei die zweite Teilmenge (215) eine Vielzahl von Tupeln umfasst, wobei jedes Tupel umfasst:
einen ersten Zustand des industriellen Steuerungssystems (130);
eine Aktion, die mit der Steuerung (150), die mit dem industriellen Steuerungssystem (130) zusammenwirkt, verknüpft ist;
einen zweiten Zustand des industriellen Steuerungssystems (130), im Anschluss an den ersten Zustand, der von dem ersten Zustand als Ergebnis eines Durchführens der Aktion durch die Steuerung (150), übergeht; und
einen Parameterwert unter Berücksichtigung eines Parameters, der als Ergebnis des Übergehens des industriellen Steuerungssystems (130) in den zweiten Zustand generiert wird.

8. System nach Anspruch 7, wobei, um die Validierungsumgebung (240) zu generieren (235), der Programmcode Anweisungen umfasst zum:
Zugreifen auf das Prognosemodell;
Vergleichen, für jedes Tupel in der Vielzahl der Tupeln in der zweiten Teilmenge (215),
eines zweiten Zustands und eines Parameterwerts, die auf der Basis des Auswertens des Prognosemodells an dem ersten Zustand und der Aktion des Tupels und dem zweiten Zustand und dem Parameterwert des Tupels, generiert werden; und
Modifizieren des Prognosemodells auf der Basis des Vergleichs.

9. System nach einem der Ansprüche 7 bis 8, wobei der Programmcode Anweisungen umfasst zum:
Auswerten der Abfolge von Aktionen auf der Steuerung (150); und
Generieren von Datentupeln für die erste (210) und die zweite (215) Teilmenge des Datensatzes (205) auf der Basis der Anwendung der Abfolge von Aktionen.

10. System nach einem der Ansprüche 7 bis 9, wobei der Parameter ein Belohnungssignal ist, das auf der Basis der Rückmeldung von dem industriellen Steuerungssystem (130) generiert wird.

## Revendications

1. Procédé (300) pour un dispositif de commande (150) dans un système de commande industriel (130) étant un système de refroidissement (130) dans un centre de données (110), le procédé comprenant :
l'accès (310) à un premier sous-ensemble (210) de données dans un ensemble de données (205), le premier sous-ensemble (210) comprenant une pluralité de tuples, chaque tuple comprenant :
un premier état du système de commande industriel (130) ;
une action associée au dispositif de commande (150) interagissant avec le système de commande industriel (130) ;
un second état du système de commande industriel (130), postérieur au premier état,
dans lequel on passe à partir du premier état à la suite de la réalisation de l'action par le dispositif de commande (150) ; et
une valeur de paramètre en tenant compte d'un paramètre généré à la suite du passage du système de commande industriel (130) dans le second état ;
dans lequel le procédé comprend en outre :
l'évaluation (320, 220) d'un algorithme d'apprentissage sur le premier sous-ensemble (210) ;
l'évaluation (330, 245), dans un environnement de validation (240), d'une action associée au dispositif de commande (150) qui est produite par l'algorithme d'apprentissage ; et
la détermination (340, 250) d'une séquence d'actions pour optimiser le paramètre sur la base de l'évaluation,
dans lequel l'environnement de validation (240) comprend un modèle prédictif qui génère un état postérieur et une estimation de la valeur de paramètre sur la base d'un état actuel du système de commande industriel (130) et d'une action associée au dispositif de commande (150),
dans lequel le procédé comprend en outre :
la génération (235) de l'environnement de validation (240) sur la base d'un second sous-ensemble (215) de données dans l'ensemble de données, le second sous-ensemble (215) comprenant une pluralité de tuples, chaque tuple comprenant :
un premier état du système de commande industriel (130) ;
une action associée au dispositif de commande (150) interagissant avec le système de commande industriel (130) ;
un second état du système de commande industriel (130), postérieur au premier état,
dans lequel on passe à partir du premier état à la suite de la réalisation de l'action par le dispositif de commande (150) ; et
une valeur de paramètre tenant compte du paramètre qui est généré à la suite du passage du système de commande industriel (130) dans le second état.

2. Procédé selon la revendication 1, dans lequel la génération (235) de l'environnement de validation (240) comprend :
l'accès au modèle prédictif ;
la comparaison, pour chaque tuple dans la pluralité des tuples dans le second sous-ensemble (215), d'un second état et d'une valeur de paramètre qui sont générés sur la base de l'évaluation du modèle prédictif sur le premier état et la première action du tuple, et du second état et de la valeur de paramètre du tuple ; et
la modification du modèle prédictif sur la base de la comparaison.

3. Procédé selon l'une quelconque des revendications précédentes, comprenant :
l'évaluation (255) de la séquence d'actions sur le dispositif de commande (150) ; et
la génération de tuples de données (270) pour les premier (210) et second (215) sous-ensembles de l'ensemble de données (205) sur la base de l'application de la séquence d'actions.

4. Procédé selon l'une quelconque des revendications précédentes, dans lequel le paramètre est un signal de récompense généré sur la base d'un retour d'informations provenant du système de commande industriel (130).

5. Procédé selon l'une quelconque des revendications 1 à 4, dans lequel le modèle prédictif est une fonction de régression linéaire, une fonction prédictive non linéaire, un réseau neuronal, une machine à amplification de gradient, une forêt aléatoire, une machine à vecteurs de support, un modèle du plus proche voisin, un processus gaussien, une régression bayésienne et/ou un ensemble.

6. Procédé selon l'une quelconque des revendications précédentes, dans lequel l'algorithme d'apprentissage est un algorithme d'apprentissage par renforcement en lots.

7. Système (400), comprenant :
au moins un processeur (402) ; et
au moins une mémoire (408) comportant un code de programme qui, lorsqu'il est exécuté par au moins un processeur, fournit des instructions pour :
accéder à un premier sous-ensemble (210) de données dans un ensemble de données (205), le premier sous-ensemble (210) comprenant une pluralité de tuples, chaque tuple comprenant :
un premier état d'un système de commande industriel (130) étant un système de refroidissement (130) dans un centre de données (110) ;
une action associée à un dispositif de commande (150) interagissant avec le système de commande industriel (130) ;
un second état du système de commande industriel (130), postérieur au premier état, dans lequel on passe à partir du premier état à la suite de la réalisation de l'action par le dispositif de commande (150) ; et
une valeur de paramètre en tenant compte d'un paramètre généré à la suite du passage du système de commande industriel (130) dans le second état ;
dans lequel le code de programme comprend en outre des instructions pour :
évaluer (220) un algorithme d'apprentissage sur le premier sous-ensemble (210) ;
évaluer (245), dans un environnement de validation (240), une action associée au dispositif de commande (150) qui est produite par l'algorithme d'apprentissage ; et
déterminer (250) une séquence d'actions pour optimiser le paramètre sur la base de l'évaluation,
dans lequel l'environnement de validation comprend un modèle prédictif qui génère un état postérieur et une estimation de la valeur de paramètre sur la base d'un état actuel du système de commande industriel (130) et d'une action associée au dispositif de commande (150),
dans lequel le code de programme comprend des instructions pour générer l'environnement de validation (240) sur la base d'un second sous-ensemble (215) de données dans l'ensemble de données (205), le second sous-ensemble (215) comprenant une pluralité de tuples, chaque tuple comprenant :
un premier état du système de commande industriel (130) ;
une action associée au dispositif de commande (150) interagissant avec le système de commande industriel (130) ;
un second état du système de commande industriel (130), postérieur au premier état,
dans lequel on passe à partir du premier état à la suite de la réalisation de l'action par le dispositif de commande (150) ; et
une valeur de paramètre tenant compte du paramètre qui est généré à la suite du passage du système de commande industriel (130) dans le second état.

8. Système selon la revendication 7, dans lequel, pour générer (235) l'environnement de validation (240), le code de programme comprend des instructions pour :
accéder au modèle prédictif ;
comparer, pour chaque tuple dans la pluralité des tuples dans le second sous-ensemble (215), un second état et une valeur de paramètre qui sont générés sur la base de l'évaluation du modèle prédictif sur le premier état et la première action du tuple, et le second état et la valeur de paramètre du tuple ; et
modifier le modèle prédictif sur la base de la comparaison.

9. Système selon l'une quelconque des revendications 7 à 8, dans lequel le code de programme comprend des instructions pour :
évaluer la séquence d'actions sur le dispositif de commande (150) ; et
générer des tuples de données pour les premier (210) et second (215) sous-ensembles de l'ensemble de données (205) sur la base de l'application de la séquence d'actions.

10. Système selon l'une quelconque des revendications 7 à 9, dans lequel le paramètre est un signal de récompense généré sur la base d'un retour d'informations provenant du système de commande industriel (130).
